# EUROPÄISCHE PATENTSCHRIFT

(11) **EP 0 831 244 B1**
(45) Veröffentlichungstag und Bekanntmachung des Hinweises auf die Patenterteilung: **17.11.2004**
(21) Anmeldenummer: 97114784.8
(22) Anmeldetag: 26.08.1997
(51) Int. Cl.: F16D 65/16

(54) **Betätigungsvorrichtung für eine Scheibenbremse sowie Herstellverfahren dafür**
Actuator for a disc brake and method of manufacturingsame
Actionneur pour frein à disque et son procédé de fabrication

(30) Priorität: 23.09.1996 DE 19638899
(43) Veröffentlichungstag der Anmeldung: 25.03.1998
(73) Patentinhaber: Continental Teves AG & Co. oHG, 60488 Frankfurt (DE)
(72) Erfinder: Bauer, Jürgen, 65187 Wiesbaden (DE)
(74) Vertreter: Portwich, Peter

(56) Entgegenhaltungen:
- EP-A- 0 263 562
- DE-A- 3 438 209
- PATENT ABSTRACTS OF JAPAN vol. 097, no. 007, 31. Juli 1997 & JP 09 060670 A (NISSIN KOGYO KK), 4. März 1997

## Beschreibung

Die vorliegende Erfindung betrifft eine Betätigungsvorrichtung für eine Scheibenbremse entsprechend dem Oberbegriff des Patentanspruchs 1. Derartige Betätigungsvorrichtungen finden bei Scheibenbremsen Anwendung, die innerhalb des Bremsgehäuses neben der hydraulischen Funktion der Betriebsbremse auch die Funktion einer mechanischen Feststellbremse erfüllen sollen.

Eine gattungsgemäße kombinierte Scheibenbremse mit hydraulischer sowie mechanischer Bremsfunktion ist in der DE 34 38 209 A1 offenbart. Eine derartige Scheibenbremse besitzt einen Schwimmsattel mit darin integrierter hydraulischer Betätigungseinrichtung. Die hydraulische Betätigungseinrichtung enthält einen Bremskolben, der bei Beaufschlagung mit dem hydraulischen Bremsflüssigkeitsdruck die axial innere Bremsbacke direkt und die äußere indirekt über den Schwimmsattel gegen die Bremsscheibe anzudrücken vermag. Außerdem ist der Bremskolben noch über eine mechanische Betätigungseinrichtung innerhalb der Zylinderbohrung des Schwimmsattels verschiebbar. Die mechanische Betätigungseinrichtung besteht im wesentlichen aus einer senkrecht zur Bremskolbenachse orientierten Betätigungswelle mit daran befestigtem Bremshebel sowie einem Druckstück, das die Betätigungskraft in Drehrichtung der Betätigungswelle unter Einsatz eines Zwischenstückes in Achsrichtung des Bremskolbens auf diesen überträgt. Dabei ist die Betätigungswelle innerhalb des Schwimmsattelgehäuses gelagert und mittels einer in einer Nut des Schwimmsattelgehäuses angeordneten Dichtung, die auf der Außenfläche der Betätigungswelle anliegt, hydraulisch gegenüber der Umgebung abgedichtet. Bei mechanischer Betätigung der Bremse, etwa bei einer Feststellbremsung, wird der Bremshebel, der üblicherweise mit einem Seilzug in Verbindung steht, zusammen mit der Betätigungswelle aus einer Ruhelage geschwenkt, wobei die Drehbewegung von Betätigungswelle und Bremshebel über das in einer Ausnehmung der Betätigungswelle anliegende Druckstück in eine bezüglich des Bremskolbens in Achsrichtung gerichtete Bewegung übertragen wird. Prinzipiell ergibt sich damit ein zur hydraulischen Betätigung analoger Funktionsablauf für den Schwimmsattel mit Kolben-Zylinder-Einheit.

Bei der beschriebenen kombinierten Schwimmsattel-Scheibenbremse mit mechanischer Betätigungseinrichtung kommt eine massiv Betätigungswelle zum Einsatz, die in aufwendiger Weise aus Vollmaterial hergestellt wird und mit einer Ausnehmung zur Aufnahme des Druckstückes versehen wird. Weiterhin besitzt die Betätigungswelle einen abgesetzten Fortsatz, der in den Bremshebel eingesteckt wird. Dabei erfolgt die unlösbare Verbindung von Bremshebel und Betätigungswelle in der Regel durch Schweißen, Löten oder Kleben. Ein deutlicher Nachteil einer derartigen mechanischen Betätigungseinrichtung besteht darin, daß Bremshebel und Betätigungswelle kostenintensiv zu fertigen sind und insbesondere nur aufwendig miteinander mechanisch exakt und hydraulisch dicht verbunden werden können. Außerdem ergibt sich speziell für die beschriebene mechanische Betätigungseinrichtung die Schwierigkeit der genauen Lagerung der Betätigungswelle innerhalb des Schwimmsattelgehäuses. Eine leichtgängige Drehbewegung der Bestätigungswelle innerhalb des Schwimmsattelgehäuses ist damit nicht immer unbedingt gegeben und kann zu Problemen bei der Feststellbremsfunktion führen.

Aus der DE 42 26 143 A1 ist eine weitere gattungsgemäße kombinierte Scheibenbremse mit mechanischer Betätigungseinrichtung bekannt, bei der zur Erhöhung der Leichtgängigkeit der Betätigungswelle innerhalb des Schwimmsattelgehäuses eine Wälzlagerung der Betätigungswelle im Gehäuse vorgesehen ist. Die Wälzlagerung wird dabei in der Regel durch ein Nadelrollenlager gebildet, das eine Öffnung zum Durchgang des Druckstückes aufweist und demzufolge die Betätigungswelle nicht vollständig umschließt. Durch die nicht vollständige Umschlingung der Betätigungwelle durch das Nadelrollenlager ergibt sich eine nicht optimale Lagerung, die sich vor allem darin äußert, daß Bremshebel und Betätigungswelle während der Betätigung zum Kippen neigen. Die Befestigung des Bremshebels an der Betätigungswelle erfolgt dabei analog zu der oben beschriebenen kombinierten Scheibenbremse.

Die Aufgabe der vorliegenden Erfindung besteht darin, die Einheit aus Bremshebel und Bestätigungswelle hinsichtlich ihrer Herstellung und Verbindung zu vereinfachen und bezüglich der Funktion zu verbessern.

Gelöst wird die gestellte Aufgabe durch die Merkmalskombination des Patentanspruchs 1. Danach ist die Betätigungswelle als rohrförmige Hohlwelle ausgeführt, die zumindest stellenweise, insbesondere in der Mitte, einen profilierten Querschnitt mit einer Einbuchtung besitzt, in der im Einbauzustand das Druckstück anliegt. Zur Herstellung einer solchen Betätigungswelle mit profiliertem Querschnitt wird die rohrförmige Hohlwelle durch einen Blechumformvorgang mit der Einbuchtung versehen, die je nach Einsatz des Umformwerkzeuges die gewünschte Kontur erhält. Die Verwendung einer umgeformten Hohlwelle macht eine aufwendige spanende Bearbeitung der Betätigungswelle überflüssig und bringt weiterhin Gewichtsvorteile mit sich.

In einer bevorzugten Ausführungsform nach Anspruch 2 ist die Betätigungswelle zumindest in ihrer Mitte mit einer Einbuchtung versehen und verbleibt an dem aus dem Bremsgehäuse heraustretenden Ende in ihrem Ursprungszustand mit kreisrunder Außenkontur. Diese kreisrunde Außenkontur an dem Betätigungswellenende, das auch dem Bremshebel zugewandt ist, ermöglicht den Einsatz einer einfachen, standardisierten Dichtung zur Abdichtung des Schwimmsattelgehäuses gegenüber der Umgebung.

In einer Weiterbildung besitzen beide Enden der Betätigungswelle eine kreisrunde Außenkontur, wodurch sowohl die Abdichtung als auch die Lagerung der Bestätigungswelle vereinfacht wird. Es wird damit der Einsatz von zwei Wälzlagern an beiden Enden der Betätigungswelle gestattet, was sich positiv auf die Leichtgängigkeit der Betätigungswelle sowie die Reduktion der Kippanfälligkeit von Betätigungswelle und Bremshebel auswirkt.

Die weiteren Ansprüche 4 bis 6 beschreiben unterschiedliche Varianten der Befestigung des Bremshebels an der Betätigungswelle. Es wird dabei sowohl eine zweiteilige als auch eine einteilige Ausführung von Betätigungswelle und Bremshebel vorgeschlagen. Bei zweiteiliger Ausführung wird der Bremshebel entweder stoffschlüssig (z.B. Schweißen, Löten, Kleben) oder aber formschlüssig mit der Betätigungswelle verbunden. Hingegen sind bei einteiliger Ausführung Bremshebel und Betätigungswelle aus einer einzigen Hohlwelle gefertigt, wobei der Bremshebel aus einem gegenüber der Betätigungswelle abgewinkelten und plattgedrückten Abschnitt der Hohlwelle besteht. Eine solche Anordnung ist insbesondere hinsichtlich der Herstellung zu bevorzugen und besitzt weiterhin Gewichtsvorteile.

In einer weiterentwickelten Form der mechanischen Betätigungseinrichtung ist die Betätigungswelle auf ihrer Innenkontur hydraulisch abgedichtet (beispielsweise durch Lackieren, Verkleben oder ähnliches).

Die Ansprüche 9 und 10 beschreiben ein Herstellverfahren für eine Betätigungsvorrichtung, insbesondere nach den oben beschriebenen Merkmalen, nach dem der profilierte Querschnitt der Betätigungswelle durch einen Blechumformvorgang an einer runden rohrförmigen Hohlwelle erzeugt wird. In einer Weiterentwicklung des Herstellverfahrens für eine zweiteilige Ausführung von Betätigungswelle und Bremshebel wird die bereits mit einer Profilierung versehene Betätigungswelle an ihrem Ende, das aus dem Schwimmsattelgehäuse herausragt, durch eine Blechumformung plattgedrückt und mit diesem plattgedrückten Wellenende in ein entsprechendes Langloch des Bremshebels formschlüssig eingesteckt. Anschließend wird das plattgedrückte Wellenende von der der Betätigungswelle abgewandten Seite des Bremshebels her aufgeweitet. Damit ist der Bremshebel verliersicher mit der Betätigungswelle verbunden. Ein zusätzlicher Bearbeitungsgang wie etwa Schweißen, Kleben oder Löten kann also entfallen.

Ausführungsbeispiele der Erfindung werden anhand der Zeichnung in sieben Figuren im folgenden erläutert.

Es zeigen:
- Fig. 1: einen Schnitt durch ein Schwimmsattelgehäuse einer kombinierten Scheibenbremse mit hydraulischer und mechanischer Betätigungseinrichtung,
- Fig. 2: eine räumliche Ansicht eines Bremshebels sowie einer Betätigungswelle,
- Fig. 3: eine Variante einer Betätigungswelle,
- Fig. 4: einen Schnitt durch eine Betätigungswelle nach den Figuren 2, 3 oder 7 entlang der Linie A-A,
- Fig. 5: einen Schnitt durch eine Betätigungswelle gemäß den Figuren 2, 3 oder 7 entlang der Linie B-B,
- Fig. 6: zwei Ansichten einer mechanischen Betätigungseinrichtung mit einer Betätigungswelle, die formschlüssig mit dem Bremshebel verbunden ist,
- Fig. 7: eine räumliche Ansicht einer einteilig mit einem abgewinkelten Bremshebel verbundene Betätigungswelle.

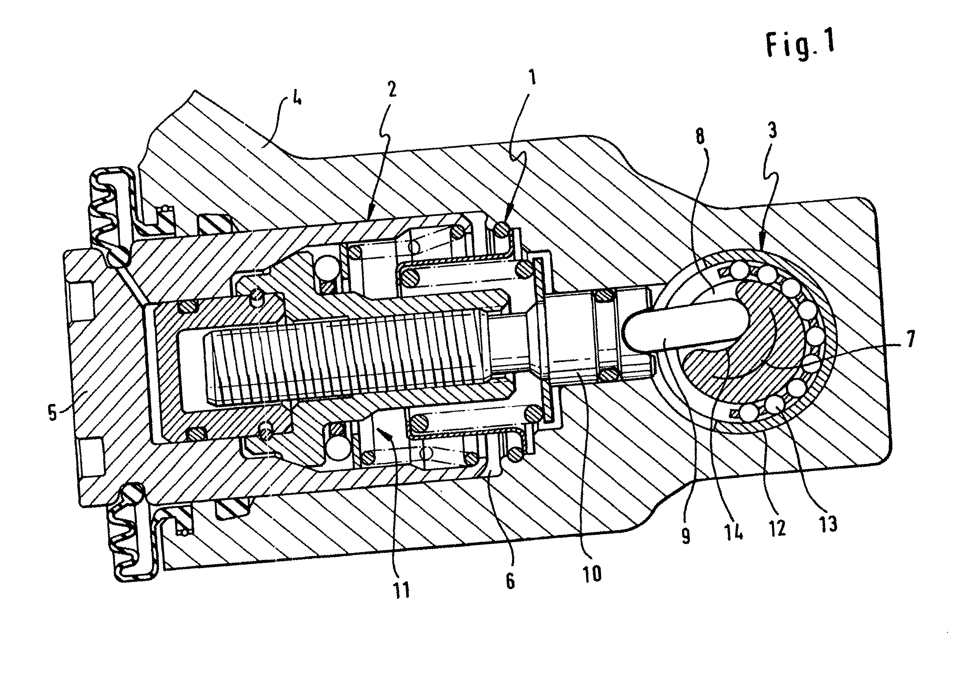

Die in Fig. 1 dargestellte kombinierte Betätigungsvorrichtung 1 einer Schwimmsattel-Scheibenbremse verfügt sowohl über eine hydraulische Betätigungseinrichtung 2 sowie über eine mechanische Betätigungseinrichtung 3. Die hydraulische 2 wie auch die mechanische Betätigungseinrichtung 3 sind innerhalb eines Schwimmsattelgehäuses 4 angeordnet und wirken bei der Bremsung beide gleichsam auf einen Bremskolben 5 ein.

Die hydraulische Betätigungseinrichtung 2 besteht im wesentlichen aus dem Bremskolben 5 und einer Zylinderbohrung 6, die in das Schwimmsattelgehäuse 4 eingebracht ist und in der der Bremskolben 5 verschiebbar angeordnet ist. Bei Betriebsbremsung wird der Raum der Zylinderbohrung 6 mit hydraulischem Druck beaufschlagt, wodurch der Bremskolben 5 in Fig. 1 nach links bewegt wird und eine nicht gezeigte axial innere Bremsbacke direkt sowie eine axial äußere Bremsbacke über das Schwimmsattelgehäuse indirekt gegen eine ebenfalls nicht gezeigte Bremsscheibe angedrückt wird.

Im Falle einer Feststellbremsung, die über die mechanische Betätigungseinrichtung 3 erfolgt, wird auf mechanischem Wege eine mit einem nicht gezeigten Bremshebel in Verbindung stehende Betätigungswelle 7 in Fig. 1 in eine entgegen dem Uhrzeigersinn gerichtete Drehbewegung versetzt. Diese Drehbewegung wird über ein in einer Einbuchtung 8 der Betätigungswelle 7 angeordnetes Druckstück 9 in eine in Achsrichtung des Bremskolbens 5 gerichtete Bewegung umgewandelt. Dabei wird das dem Bremskolben 5 zugewandte Ende des Druckstückes 9 vom Ende einer Nachstellspindel 10 aufgenommen, die Bestandteil einer hier nicht näher erläuterten Nachstellvorrichtung 11 ist. Die in Achsrichtung des Bremskolbens 5 verlängerbare Nachstellvorrichtung 11 trägt dafür Sorge, daß der auftretende Belagverschleiß ausgeglichen wird und damit die mechanische Betätigungseinrichtung 3 bei jeder Feststellbremsung in etwa den gleichen Betätigungsweg zurücklegt.

Die senkrecht zur Bremskolbenachse orientierte Betätigungswelle 7 ist innerhalb einer Bohrung 12 des Schwimmsattelgehäuses 4 mittels eines Wälzlagers 13, insbesondere Nadellager, gegenüber dem Schwimmsattelgehäuse 4 leichtgängig drehbar. Dabei wird die Betätigungswelle 7 von einer rohrförmigen Hohlwelle gebildet, die im Bereich der Aufnahme des Druckstückes 9 über einen profilierten Bereich 14 verfügt, in dem das Druckstück 9 innerhalb einer Einbuchtung 8 der Betätigungswelle 7 anliegt. Die gewünschte Profilierung der Betätigungswelle 7 wird durch eine einfache Blechumformung der Hohlwelle oder eines einfachen Rohres geschaffen. Das Wälzlager 13 befindet sich im gleichen Abschnitt der Betätigungswelle 7, in dem auch das Druckstück 9 angeordnet ist, und umschlingt die Betätigungswelle 7 zum Durchgriff des Druckstückes 9 nicht über ihren gesamten Umfang. Eine derartige Lagerung der Betätigungswelle 7 mit nur einem einzigen Wälzlager 13 erweist sich als besonders kostengünstig, birgt aber auch die Gefahr der Kippneigung bzw. Schiefstellung der Betätigungswelle 7 innerhalb des Schwimmsattelgehäuses 4. Selbstverständlich besteht auch die Möglichkeit der Lagerung der Betätigungswelle 7 mittels zweier Wälzlager, wie es insbesondere anhand der übrigen Figuren erläutert wird.

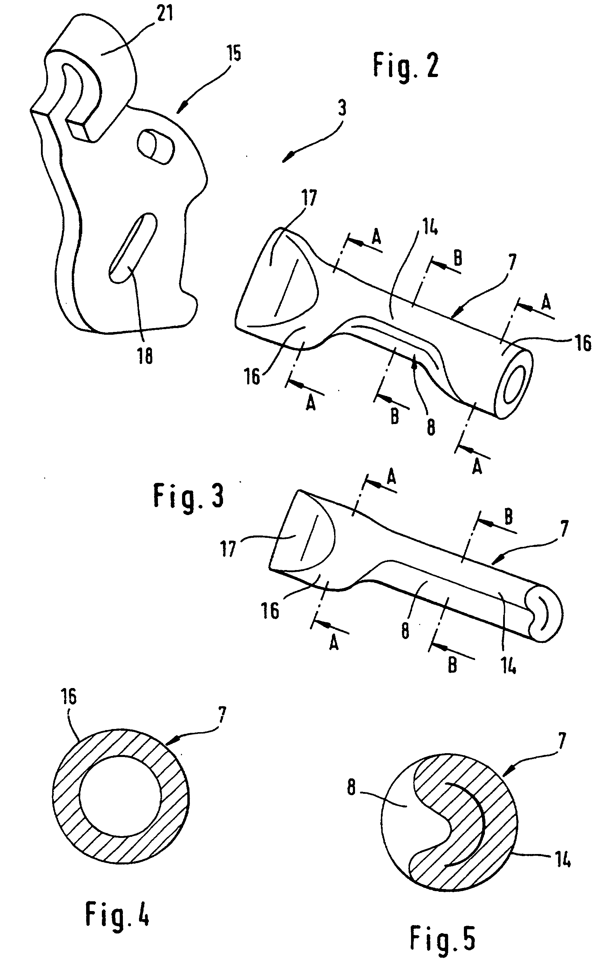

In Fig. 2 ist eine zweiteilige Ausführung von Betätigungswelle 7 und Bremshebel 15 dargestellt, wobei die Bestätigungswelle 7 durch einfache Blechumformung aus einer rohrförmigen Hohlwelle erzeugt wird. In der Mitte besitzt die Betätigungswelle 7 einen profilierten Abschnitt 14, bei dem während der Blechumformung der Hohlwelle eine Einbuchtung 8 eingedrückt wurde. Die Außenkontur des profilierten Abschnittes 14 mit der Einbuchtung 8 läßt sich genauer in einer geschnittenen Ansicht der Betätigungswelle 7 nach Fig. 5 erkennen. Dabei ist die Kontur insbesondere der Einbuchtung 8 durch eine Auswahl des bei der Blechumformung verwendeten Werkzeuges speziell an die Ausführung des Druckstückes 9 angepaßt, das im späteren Einbauzustand der mechanischen Betätigungseinrichtung 3 innerhalb der Einbuchtung 8 anliegt. An den profilierten Wellenabschnitt 14 beidseitig angrenzend sind Wellenabschnitte 16 mit kreisrunder Außenkontur vorgesehen. Diese Abschnitte 16 sind im Schnitt in Fig. 4 abgebildet und dienen mit ihren Außenflächen insbesondere der Aufnahme zweier nicht gezeigter Wälzlager 13. Durch die Verwendung zweier Wälzlager ist die Betätigungswelle 7 kippsicher innerhalb des nicht gezeigten Schwimmsattelgehäuses 4 gelagert. Weiterhin ist für einen kreisrunden Abschnitt 16 insbesondere an dem dem Bremshebel 15 zugewandten Ende der Betätigungswelle 7 die Abdichtung der kombinierten Betätigungsvorrichtung 1 gegenüber der Umgebung deutlich vereinfacht. Eine kreisrunde Außenkontur der Betätigungswelle 7 gestattet die Verwendung standardisierter Abdichtungen des mit hydraulischem Druck beaufschlagten Bereiches der kombinierten Betätigungsvorrichtung 1. Unmittelbar an dem Ende der Betätigungswelle 7, welches dem Bremshebel 15 zugewandt ist, besitzt die Betätigungswelle 7 einen plattgedrückten Abschnitt 17, der zur formschlüssigen Montage der Betätigungswelle 7 am Bremshebel 15 in ein entsprechend ausgebildetes Langloch 18 im Bremshebel 15 eingesteckt wird. Bei Verwendung einer aus Betätigungswelle 7 und Bremshebel 15 bestehenden zweiteiligen Betätigungseinrichtung 3 ist eine zusätzliche Abdichtung der Betätigungswelle auch der Innenkontur sinnvoll, die beispielsweise durch Lackieren, Verkleben oder ähnliches erfolgt.

Fig. 3 ist eine Variante einer Betätigungswelle 7 zu entnehmen, die über fast die gesamte Länge der Betätigungswelle 7 profiliert ausgebildet ist. Die Herstellung der Einbuchtung 8 innerhalb des profilierten Abschnittes 14 aus einer einfachen Hohlwelle läßt sich beispielsweise durch eine Rollbearbeitung realisieren. Angrenzend an den profilierten Abschnitt 14 besitzt die Betätigungswelle 7 nach Fig. 3 ebenfalls einen kreisrunden Wellenabschnitt 16, der in erster Linie der einfachen Abdichtung der kombinierten Betätigungsvorrichtung 1 dient. Die Lagerung einer derartigen Betätigungswelle 7 innerhalb des Schwimmsattelgehäuses 4 erfolgt über ein Wälzlager 13, das die Betätigungswelle 7 nicht vollständig umschlingt und bereits in Fig. 1 dargestellt wurde. Die Befestigung der Betätigungswelle 7 am Bremshebel 15 wird analog zu Fig. 2 bewerkstelligt. Selbstverständlich kann die Betätigungswelle 7 nicht nur formschlüssig, sondern auch stoffschlüssig (beispielsweise durch Schweißen, Löten oder Kleben) am Bremshebel 15 befestigt werden. Eine stoffschlüssige Verbindung erleichtert zudem die Abdichtung und erfordert nicht unbedingt einen plattgedrückten Wellenabschnitt 17 am Ende der Betätigungswelle 7.

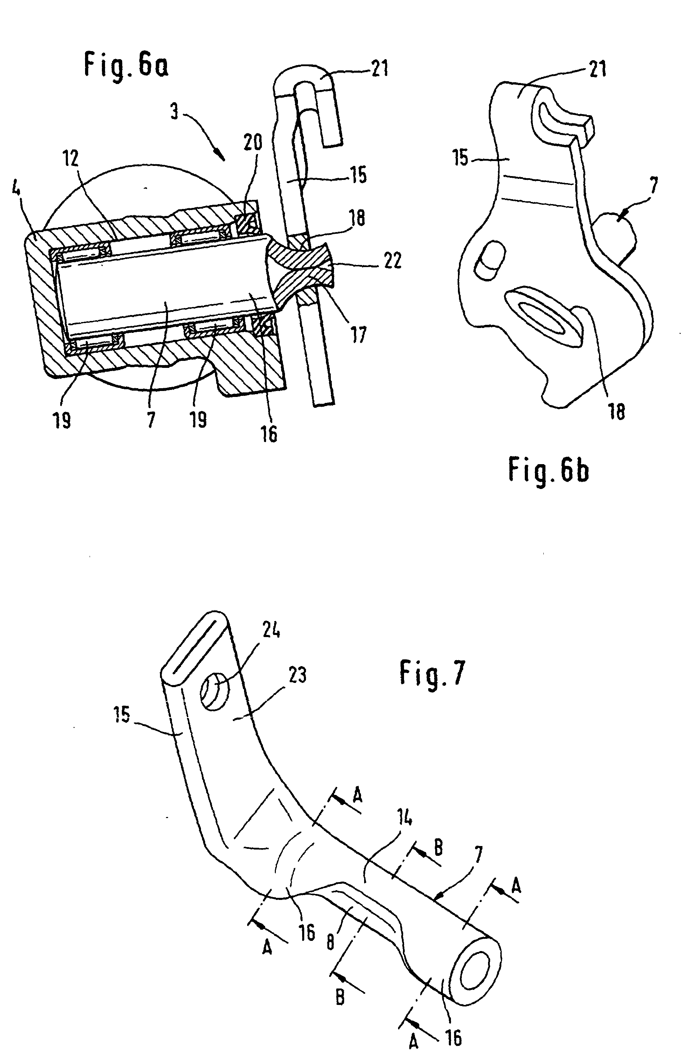

Fig. 6 zeigt in zwei Ansichten eine mechanische Betätigungsvorrichtung 3, bei der die Betätigungswelle 7 formschlüssig mit dem Bremshebel 15 verbunden ist. Dabei ist die aus einer einfachen Hohlwelle mittels Blechumformung hergestellte Betätigungswelle 7 über zwei Nadellager 19 innerhalb einer Bohrung 12 des Schwimmsattelgehäuses 4 gelagert. Die Abdichtung erfolgt auf dem kreisrunden Wellenabschnitt 16 durch eine einfache Wellendichtung 20 mit Dichtlippe. Der Bremshebel 15 verfügt an seinem Ende über eine U-förmige Aufnahme für das nicht gezeigte Ende eines Seilzuges einer Feststellbremse. Die Übertragung der Feststellbremskraft, ausgehend vom Seilzug über den Bremshebel 15 auf die Betätigungswelle 7 wird durch eine formschlüssige Verbindung des Bremshebels 15 mit der Betätigungswelle 7 gewährleistet. Dazu wird der plattgedrückte Wellenabschnitt 17 am Ende der Betätigungswelle 7 in ein entsprechend geformtes Langloch 17 im Bremshebel 15 eingeschoben und anschließend von der der Betätigungswelle 7 abgewendeten Seite des Bremshebels 15 her durch eine weitere Umformbearbeitung mit einer Aufweitung 22 versehen. Dabei trägt die Aufweitung 22 dafür Sorge, daß der Bremshebel 15 spielfrei und verliersicher an der Betätigungswelle 7 befestigt ist. Für eine solche Verbindung, die ohne zusätzliches Schweißen, Kleben oder Löten auskommt, ist allerdings eine Abdichtung der Betätigungswelle 7 auf ihrer Innenkontur, beispielsweise durch Lackieren oder Kleben, erforderlich.

Fig. 7 zeigt eine Weiterentwicklung der Erfindung, bei der Betätigungswelle 7 und Bremshebel 15 einteilig als kombiniertes Bauteil ausgeführt sind. Die Einheit aus Betätigungswelle 7 und Bremshebel 15 wird im Stück aus einer runden Hohlwelle gefertigt, wobei der Bremshebel 15 durch einen gegenüber der Betätigungswelle 7 abgewinkelten und plattgedrückten Abschnitt 23 gebildet wird. Der Abschnitt 23, der die Funktion des Bremshebels 15 übernimmt, ist an seinem Ende mit einem Loch 24 versehen, daß zur Einhängung des nicht gezeigten Seilzuges der Feststellbremse gedacht ist. Der Abschnitt der Betätigungswelle 7 entspricht im wesentlichen dem in Fig. 2 bereits erläuterten, bei zweiteiliger Ausführung von Betätigungswelle 7 und Bremshebel 15. Die einteilige Ausführung von Betätigungswelle 7 und Bremshebel 15 stellt sicherlich die einfachste Variante dar, die nicht nur Gewichtsvorteile mit sich bringt und eine zusätzliche Bauteilersparnis bedeutet, sondern vielmehr noch auf besonders kostengünstige Weise durch einfache Blechumformvorgänge aus einem runden Rohrelement mit geeigneter Oberfläche herstellbar ist.

Ergänzend dazu verbleiben bei einteiliger Ausführung natürlich die Vorteile einer einfachen und komfortablen Lagerung und Abdichtung der Betätigungswelle 7.

## Patentansprüche

1. Betätigungsvorrichtung (1) für eine Scheibenbremse, die in ihrem den Rand einer Bremsscheibe umgreifenden axial verschieblichen Schwimmsattelgehäuse (4) einen Bremskolben (5) aufweist, der zur Betätigung einer axial inneren Bremsbacke in einer Zylinderbohrung (6) verschiebbar angeordnet ist, mit einem mechanisch betätigbaren Bremshebel (15), der drehfest mit einer im Schwimmsattelgehäuse (4) drehbar gelagerten Betätigungswelle (7) verbunden ist, mit einem zwischen der Betätigungswelle (7) und dem Bremskolben (5) bzw. einem weiteren Betätigungselement angeordneten Druckstück (9), das innerhalb einer Einbuchtung (8) der Betätigungswelle (7) an dieser abgestützt ist, **dadurch gekennzeichnet, daß** die Betätigungswelle (7) als rohrförmige Hohlwelle ausgeführt ist, die zumindest abschnittsweise einen profilierten Querschnitt (14) mit der Einbuchtung (8) zur Aufnahme des Druckstückes (9) aufweist.

2. Betätigungsvorrichtung (1) nach Anspruch 1, **dadurch gekennzeichnet, daß** die Betätigungswelle (7) zumindest in der Mitte einen profilierten Abschnitt (14) mit Einbuchtung (8) besitzt und wenigstens an dem aus dem Schwimmsattelgehäuse (4) heraustretenden Ende der Betätigungswelle (7) einen Wellenabschnitt (16) mit kreisrunder Außenkontur aufweist.

3. Betätigungsvorrichtung (1) nach Anspruch 2, **dadurch gekennzeichnet, daß** beiderseits des profilierten Abschnittes (14) der Betätigungswelle (7) Wellenabschnitte (16) mit kreisrunder Außenkontur vorgesehen sind.

4. Betätigungsvorrichtung (1) nach zumindest einem der vorhergehenden Ansprüche, **dadurch gekennzeichnet, daß** die Betätigungswelle (7) stoffschlüssig mit dem Bremshebel (15) verbunden ist.

5. Betätigungsvorrichtung (1) nach zumindest einem der Ansprüche 1 bis 3, **dadurch gekennzeichnet, daß** die Betätigungswelle (7) formschlüssig mit dem Bremshebel (15) verbunden ist.

6. Betätigungsvorrichtung (1) nach zumindest einem der Ansprüche 1 bis 3, **dadurch gekennzeichnet, daß** die Betätigungswelle (7) und der Bremshebel (15) einteilig miteinander verbunden sind.

7. Betätigungsvorrichtung (1) nach Anspruch 6, **dadurch gekennzeichnet, daß** der Bremshebel (15) aus einem gegenüber der Betätigungswelle (7) abgewinkelten, plattgedrückten Abschnitt (23) einer Hohlwelle besteht.

8. Betätigungsvorrichtung (1) nach einem der vorhergehenden Ansprüche, **dadurch gekennzeichnet, daß** die Betätigungswelle (7) auf ihrer Innenkontur hydraulisch abgedichtet ist.

9. Herstellverfahren für eine Betätigungsvorrichtung (1), nach einem der vorhergehenden Ansprüche, **dadurch gekennzeichnet, daß** die Einbuchtung (8) im profilierten Abschnitt (14) der Betätigungswelle (7) durch einen Blechumformvorgang an einer runden Hohlwelle erzeugt ist.

10. Herstellverfahren für einen Betätigungsvorrichtung (1) nach Anspruch 5, **dadurch gekennzeichnet, daß** die Betätigungswelle (7) an ihrem mit dem Bremshebel (15) zugewandten Ende plattgedrückt wird, mit diesem plattgedrückten Wellenende (17) formschlüssig in ein entsprechendes Langloch (18) im Bremshebel (15) eingesteckt wird und anschließend das plattgedrückte Wellenende (17) von der der Betätigungswelle (7) abgewandten Seite des Bremshebels (15) her durch eine Blechumformung eine Aufweitung erhält.

## Claims

1. Actuating device (1) for a disc brake which includes a brake piston (5) in its axially slidable floating caliper housing (4) that straddles the edge of a brake disc, said brake piston being displaceably arranged in a cylinder bore (6) for actuating an axially inward brake shoe, with a mechanically operable brake lever (15) that is unrotatably connected to an actuating shaft (7) pivoted in the floating caliper housing (4), with a pressure member (9) arranged between the actuating shaft (7) and the brake piston (5) or another actuating element, said pressure member being supported on the actuating shaft (7) within a recess (8) thereof,
**characterized in that** the actuating shaft (7) is configured as a tubular hollow shaft which has a profiled cross-section (14), at least in part, with the recess (8) to accommodate the pressure member (9).

2. Actuating device (1) as claimed in claim 1,
**characterized in that** the actuating shaft (7), at least in its middle, has a profiled portion (14) with recess (8) and includes a shaft portion (16) with a circular outside contour at least at the end of the actuating shaft (7) that extends out of the floating caliper housing (4).

3. Actuating device (1) as claimed in claim 2,
**characterized in that** shaft portions (16) with a circular outside contour are provided on either side of the profiled portion (14) of the actuating shaft (7).

4. Actuating device (1) as claimed in at least any one of the preceding claims,
**characterized in that** the actuating shaft (7) is molecularly bonded with the brake lever (15).

5. Actuating device (1) as claimed in at least any one of claims 1 to 3,
**characterized in that** the actuating shaft (7) is positively connected to the brake lever (15).

6. Actuating device (1) as claimed in at least any one of claims 1 to 3,
**characterized in that** the actuating shaft (7) and the brake lever (15) are integrally connected.

7. Actuating device (1) as claimed in claim 6,
**characterized in that** the brake lever (15) is composed of a flattened portion (23) of a hollow shaft angled off with respect to the actuating shaft (7).

8. Actuating device (1) as claimed in any one of the preceding claims,
**characterized in that** the actuating shaft (7) is hydraulically sealed on its inside contour.

9. Manufacturing method for an actuating device (1) as claimed in any one of the preceding claims,
**characterized in that** the recess (8) in the profiled portion (14) of the actuating shaft (7) is produced in a sheet-metal forming operation at a round hollow shaft.

10. Manufacturing method for an actuating device (1) as claimed in claim 5,
**characterized in that** the actuating shaft (7) is flattened at its end close to the brake lever (15), this flattened shaft end (17) is form-lockingly inserted into a corresponding oblong hole (18) in the brake lever (15) and, subsequently, the flattened shaft end (17) is expanded in a sheet-metal forming operation from the side of the brake lever (15) remote from the actuating shaft (7).

## Revendications

1. Dispositif d'actionnement (1) pour un frein à disque comportant un piston de frein (5) disposé dans son boîtier d'étrier flottant (4) axialement déplaçable et entournant le bord d'un frein à disque, piston étant disposé de manière déplaçable dans un alésage de cylindre (6) pour actionner un mâchoire de frein prévu axialement dans l'intérieur, dispositif d'actionnement comportant un levier de frein à mécanique (15) lié de manière non-rotative à un arbre d'actionnement (7) disposé de manière pivotante dans le boîtier d'étrier flottant (4), comportant un membre de pression (9) disposé entre l'arbre d'actionnement (7) et le piston à frein (5) ou un autre élément d'actionnement appui par l'arbre d'actionnement dans une indentation (8) de ce dernier, **caractérisé en ce que** l'arbre d'actionnement (7) est configuré comme l'arbre creux tubulaire comportant au moins section par section un profil en travers (14) avec l'indentation (8) pour recueillir le membre de pression (9).

2. Dispositif d'actionnement (1) selon la revendication 1,
**caractérisé en ce que** l'arbre d'actionnement (7) au moins au centre comporte un profile en travers (14) avec l'indentation (8) et au moins à l'extrémité de l'arbre d'actionnement (7) sortant du boîtier d'étrier flottant (4) est prévu d'une section d'arbre (16) de contour extérieur circulaire.

3. Dispositif d'actionnement (1) selon la revendication 2,
**caractérisé en ce que** des sections d'arbre (16) d'un contour extérieur circulaire sont prévues de deux côtés du profil en travers (14) de l'arbre d'actionnement (7).

4. Dispositif d'actionnement (1) selon au moins l'une des revendications précédentes,
**caractérisé en ce que** l'arbre d'actionnement (7) est lié matériellement au levier de frein à main (15).

5. Dispositif d'actionnement (1) selon au moins l'une des revendications 1 à 3,
**caractérisé en ce que** l'arbre d'actionnement (7) est lié au levier de frein de manière mécanique.

6. Dispositif d'actionnement (1) selon au moins l'une des revendications 1 à 3,
**caractérisé en ce que** l'arbre d'actionnement (7) et le levier de frein (15) sont liés l'un à l'autre en une partie.

7. Dispositif d'actionnement (1) selon la revendication 6,
**caractérisé en ce que** le levier de frein (15) est composé d'une section aplatie (23) d'un arbre creux à angles vis-à-vis l'arbre d'actionnement (7).

8. Dispositif d'actionnement (1) selon l'une des revendications précédentes,
**caractérisé en ce que** l'arbre d'actionnement (7) à son contour intérieur est étoupé par hydraulique.

9. Procédé de fabrication pour un dispositif d'actionnement (1) selon l'une des revendications précédentes,
**caractérisé en ce que** l'indentation (8) dans le profil en travers (14) de l'arbre d'actionnement (7) est générée à un arbre creux circulaire par l'intermédiaire d'un procédé à déformation de tôles.

10. Procédé de fabrication pour un dispositif d'actionnement (1) selon la revendication 5,
**caractérisé en ce que** l'arbre d'actionnement (7) à l'extrémité tournée vers le levier de frein (15) est aplati, l'arbre d'actionnement étant placé avec cette extrémité d'arbre aplatie (17) dans un trou oblong correspondant prévu dans le levier de frein (15) de manière mécanique et ensuite l'extrémité d'arbre (17) aplatie du côté du levier de frein (15) détourné de l'arbre d'actionnement (7) est prévue d'un élargissement réalisée par l'intermédiaire d'une transformation de tôles.
